(19) Europäisches Patentamt / European Patent Office / Office européen des brevets

(11) **EP 2 431 120 B1**

(12) **EUROPEAN PATENT SPECIFICATION**

(45) Date of publication and mention
of the grant of the patent:
**05.07.2017 Bulletin 2017/27**

(51) Int Cl.:
***B23K 26/06*** *(2014.01)*  ***B23K 26/067*** *(2006.01)*
***B82Y 40/00*** *(2011.01)*

(21) Application number: **11160615.8**

(22) Date of filing: **31.03.2011**

(54) **Method of forming periodic structures in thin films using interfering laser beams**

Verfahren zur Erzeugung periodischer Strukturen in dünnen Schichten unter Verwendung interferierender Laserstrahlen

Méthode de formation de structures périodiques dans des films minces utilisant des faisceaux laser interférants

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.09.2010 LT 2010069**

(43) Date of publication of application:
**21.03.2012 Bulletin 2012/12**

(73) Proprietor: **Valstybinis moksliniu tyrimu institutas Fiziniu ir technologijos mokslu centras
20300 Vilnius (LT)**

(72) Inventors:
• **Raciukaitis, Gediminas**
  **06226 Vilnius (LT)**
• **Gedvilas, Mindaugas**
  **08446 Vilnius (LT)**
• **Voisiat, Bogdan**
  **02108 Vilnius (LT)**

(74) Representative: **Draugeliene, Virgina Adolfina
Tarpine Ltd
A. P. Kavoliuko g. 24-152
04328 Vilnius (LT)**

(56) References cited:
**DE-A1-102006 023 940     JP-A- 2003 025 085**

• **ZHAO QUAN-ZHONG ET AL: "Formation of arrayed holes on metal foil and metal film by multibeam interfering femtosecond laser beams", CHINESE PHYSICS, INSTITUTE OF PHYSICS PUBLISHING, BRISTOL, UK, vol. 14, no. 6, 1 June 2005 (2005-06-01), pages 1181-1184, XP020092474, ISSN: 1009-1963, DOI: 10.1088/1009-1963/14/6/021**
• **MOLOTOKAITE E ET AL: "Picosecond laser beam interference ablation of thin metal films on glass substrate", JOURNAL OF LASER MICRO/NANOENGINEERING, JAPAN LASER PROCESSING SOCIETY, JP, vol. 5, no. 1, February 2010 (2010-02), pages 74-79, XP002664674, DOI: DOI:10.2961/JLMN.2010.01.0016**
• **MÄDER M ET AL: "Large area metal dot matrices made by diffraction mask projection laser ablation", PHYSICA STATUS SOLIDI (RRL) - RAPID RESEARCH LETTERS WILEY-VCH VERLAG GMBH GERMANY, vol. 2, no. 1, January 2008 (2008-01), pages 34-36, XP002664743, ISSN: 1862-6254**
• **Nakata Y; Okada T; Maeda M: "Generation of nanosized materials by processing of thin film by interfering femtosecond laser beams" In: "Proceedings of the SPIE", 2004, BELLINGHAM WA, US, XP040194075, vol. 5662, pages 749-754, * the whole document * * Section 2 ***

**(Cont. next page)**

- LASAGNI A F ET AL: "Direct fabrication of periodic patterns with hierarchical sub-wavelength structures on poly(3,4-ethylene dioxythiophene)poly(styrene sulfonate) thin films using femtosecond laser interference patterning", APPLIED SURFACE SCIENCE, ELSEVIER, AMSTERDAM, NL, vol. 256, no. 6, 1 January 2010 (2010-01-01), pages 1708-1713, XP026820494, ISSN: 0169-4332 [retrieved on 2009-10-06]

- Andrés Fabián Lasagni ET AL: "Advanced design of periodical structures by laser interference metallurgy in the micro, nano scale on macroscopic areas", , 31 December 2007 (2007-12-31), XP55335103, Retrieved from the Internet: URL:http://scidok.sulb.uni-saarland.de/vol ltexte/2007/1052/pdf/Lasagni_PhD_SULB.pdf

**Description**

The invention relates to the field of laser technology and provides methods for direct formation of periodic structures in thin films, especially of metals, and can be used to fabricate periodic structures (arrays) for spectral and other optical devices, as well as shielding of electromagnetic field.

JP 62114138 discloses a method of treatment using interfering laser beams, where a photoresist is irradiated by an interference field of four beams, the photoresist is developed and the metal film gets chemically etched through the holes in the photoresist. After applying this method to films, only a matrix of circular holes can be fabricated.

JP 11026344 discloses a method for treatment using the interfering laser beams, where a periodic structure is formed by four laser beams, by choosing the specific beam alignment angle and the phase difference between pairs of the opposite arranged beams. The said interfering beams form a periodic radiation intensity distribution in the photoresist, which is coated on the material that needs to be treated. After the exposure, the photoresist is developed and a 2D structure, which has a period that can be controlled by changing the wavelength of laser radiation and the convergence angle of the beams is produced.

The disadvantage of the known methods is that the structure is initially formed in a photoresist, and then the formation of periodic structures requires chemical etching, which is a multi-stage and therefore slow, complex and expensive process.

CN 1603888 discloses a method for formation of periodic structures in the thin metal films on the transparent material substrate, when the pulse laser beam is split into two beams that are focused on the metal film, by forming there an interference field, where at the intensity maxima of the interference field the metal is ablated, and is transfered to another transparent substrate placed nearby, by forming a periodic structure of circular condensed metallic islands, which corresponds to the layout of the intensity maxima of the interference field. JP 2003025085 discloses a method for formation of periodic structures in thin material films by interfering laser beams, where many beams (3 or more) are directed to a thin film to form an interference field in it. The method provides means for the control of the quantity of beams, phase difference between the beams and their amplitude (intensity). The phase difference is chosen 0 or $\pi/2$. At the maxima of the interference field intensity, the material is modified by forming periodic structure.

By applying this method to films, only a matrix of circular holes can be obtained, because this method is limited to making an impact to material at the interference field distribution maxima. The disadvantage of the known method is that it can be used to form periodic structures with only one configuration and there is no possibility to change the shape of the formed periodic structure.

Zhao Quan-Zhong et al.: "Formation of arrayed holes on metal foil and metal film by multibeam interfering femtosecond laser beams", Chinese Physics, Institue of Phasics Publishing, Bristol, GB, vol. 14, no. 6, June 2010, p. 1181-1184 discloses a method of forming arrayed holes in a metal film on a glass substrate by multibeam interfering femtosecond laser beams. The adjusting of laser energy, angle of the beams and focal length, inter alia, are parameters mentioned to change period and shape of the fabricated structures. The disclosed working regime corresponds however to intensity maxima close to the film evaporation threshold so that the tailoring of the pattern shape is limited.

DE102006023940 discloses the nanostructuring of a metal or semiconductor substrate by direct laser ablation. The substrate surface is coated with a sacrificial hardened transparent polymer layer. Femtosecond pulsed laser beams are made to interfere to irradiate the substrate surface with a spatially distributed laser intensity pattern. The energy density in the high intensity region of the intensity pattern is slightly above the threshold to ablate the substrate surface. By varying the irradiation pattern and the laser fluence, unusual patterns are formed.

Accordingly, there is a need to form periodic structures directly without using intermediate films (photoresist) and without using additional operations (coating the photoresist, developing and chemical etching of it), and to control the formation of periodic structures with different patterns, and also to extend the field of application for the structures obtained using this method. This objective is achieved by providing a method as defined in the appended claims. This method does not require complex process in order to directly obtain different images of the formed structures, i.e. the threshold nature of film ablation creates the conditions for controlling the formed image of the periodic structures (the design, shape) by changing the total intensity of the interfering laser beams and allows extending the field of application for the structures obtained using this method.

According to the present invention a phase difference $\Delta\varphi$ between the interfering laser beams is provided.

This gives additional control on the interfering laser intensity distribution and allows obtaining greater diversity of formed periodic structures.

Preferably, three or four, or six interfering laser beams, laid out symmetrically in respect to the normal to the film surface, are directed into the said film.

By choosing the number of beams 3 or 6 it is possible to obtain structures with the hexagonal symmetry, while by using 4 beams it is possible to obtain structures with the squared or rectangular symmetry.

Yet another beneficial implementation of the proposed method is that the interference distribution image can be additionally modified by directing an additional central laser beam into the said film, in the direction of the symmetry axis of the said interfering laser beams.

This gives additional control over the interfering laser intensity distribution, depending on the position of the film in respect to the intersection point of the beams, and allows obtaining greater diversity of formed periodic structures.

Besides, the image of the interference distribution is additionally modified by choosing the distance $\Delta z$ between the said film and the beam intersection point within it along the propagation direction z of the central beam.

The thin film material is a metal such as chromium, aluminum, silver, copper, gold, while the substrate is a transparent material, for instance, glass.

In this case, it can be used in manufacturing spectral filters, for visible, infrared and terahertz spectral ranges, depending on the period of the structure and the shape and size of the structural elements. Another field of application is a manufacturing of thin films by forming frequency selective coatings for radio or optical spectral ranges.

The thin film is an electrically conductive material, such as indium-tin oxide, while the substrate is a dielectric material such as glass or polymer. In this case, the method can be used forming thin-film electronic contacts, for example, in LCD display manufacturing.

Another beneficial method realization is, that the substrate is glass coated with a thin chromium film, with four interfering laser beams directed at it, where depending on the desired shape of the periodic structure, the phase difference $\Delta \varphi$ between the opposite pairs of beams is selected between zero and $\pi/2$, while the laser intensity at the formed intensity $I_0$, distribution maxima is selected in such a way, that evaporation intensity threshold $I_{th}$ of the said film should be from accordingly 50% up to approximately 1,5%, intensity $I_0$, at the formed interference distribution maxima.

The invention is explained in more detail with the help of figures, where:

Fig. 1 - The optical scheme of the device for formation of periodical structures, for the implementation of the proposed method.

Fig. 2 - The scheme of interference image formation, without the central beam (a) and when the central beam is present **0** (b).

Fig. 3 - The scheme of the symmetrical layout of the four interfering laser beams.

Fig. 4 - Images of the periodic structures obtained by forming with the four symmetrically arranged interfering laser beams according to Fig. 3, by changing the overall level of intensity and/or the phase between the beams, where it is shown:

a) the "standard" image with the circular holes on a metal film on the glass substrate;

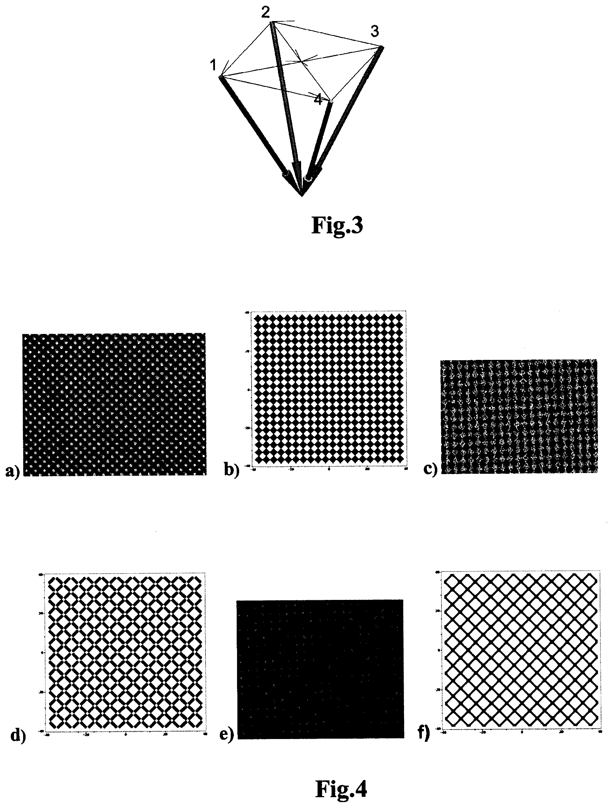

b) the image of rhombus laid out in a "chess"-like pattern, obtained when the phase difference between the even (2, 4) and the odd (1, 3) beams equals $\Delta \varphi = \pi/2$ and the laser intensity at the maxima of the interference distribution satisfies the condition

$$I_{th} = I_0 x\ 50\%;$$

c) the image of rhombus laid out in a "chess-board"-like pattern, experimentally obtained in a chromium film of 100 nm thickness on the glass, when the conditions of Fig. 4b are satisfied;

d) the image in the form of the segmented net-like structure, obtained when the phase difference between the even (2, 4) and the odd (1, 3) beams equals $\Delta \varphi = \pi/4$ and $I_{th} = I_0 \times 14\%$;

e) the image in the form of a net-like structure, experimentally obtained in a chromium film of 100 nm thickness on the glass substrate, when the phase difference between the even (2, 4) and the odd (1, 3) beams $\Delta \varphi$ gradually changes from left to right and on the right-hand side the conditions of Fig. 44d are satisfied;

f) the image in the form of the simple net, obtained when the phase difference between the even (2, 4) and the odd (1, 3) beams equals $\Delta \varphi = \pi/8$ **and $I_{th} = I_0 \times 4\%$.**

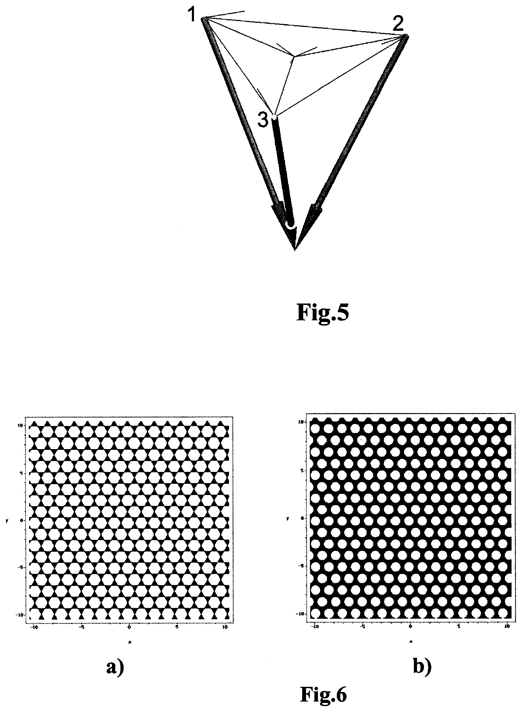

Fig. 5 - The scheme of the symmetrical layout of the three interfering laser beams.

Fig. 6 - Images of the periodic structures obtained by forming with the symmetrically arranged three interfering laser beams according to Fig.5, when $\Delta\varphi = 0$ and $I_{th} = I_0 \times 11\%$ (a) *and $I_{th} = I_0 \times 50\%$* (b).

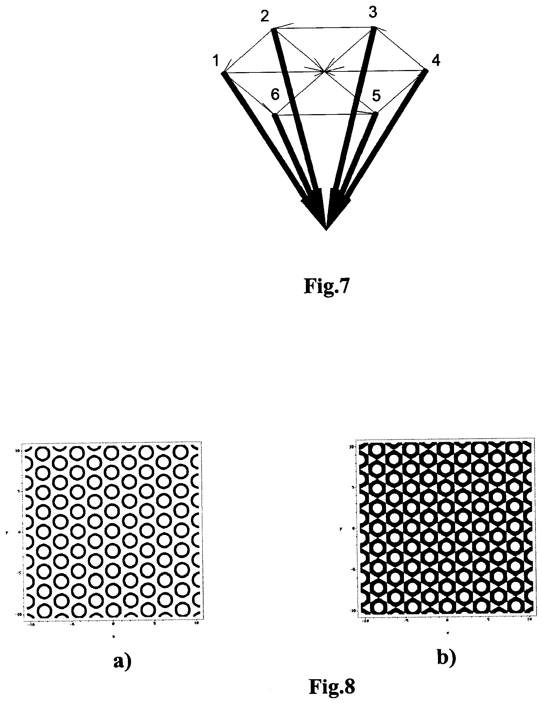

Fig. 7 - The scheme of the symmetrical layout of the six interfering laser beams.

Fig. 8 - Images of the periodic structures obtained by forming with the symmetrically arranged six interfering laser beams according to Fig. 7, when $\Delta\varphi = 0$ and $I_{th} = I_0 \times 6\%$ (a) *and $I_{th} = I_0 \times 11\%$* (b).

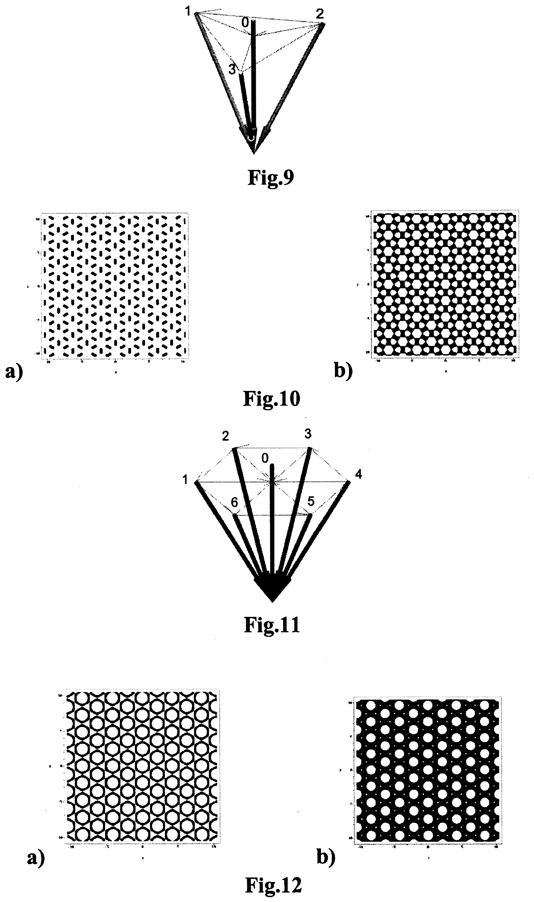

Fig. 9 - The scheme of the layout of the three symmetrically arranged beams and the central beam.

Fig. 10 - Images of the periodic structures obtained by forming with the symmetrically arranged three interfering laser beams and the central beam according to Fig. 9, when $\Delta\varphi = 0$, $\Delta z = 0$ and $I_{th} = I_0 \times 6\%$ (a) and $I_{th} = I_0 \times 11\%$ (b).

Fig. 11 - The scheme of the layout of the six symmetrically arranged beams and the central beam.

Fig. 12 - Images of the periodic structures obtained by forming with the symmetrically arranged six interfering laser beams and the central beam according to Fig. 11, when $\Delta\varphi = 0$, $\Delta z = 0$ and $I_{th} = I_0 \times 1.5\%$ (a) and $I_{th} = I_0 \times 7\%$ (b).

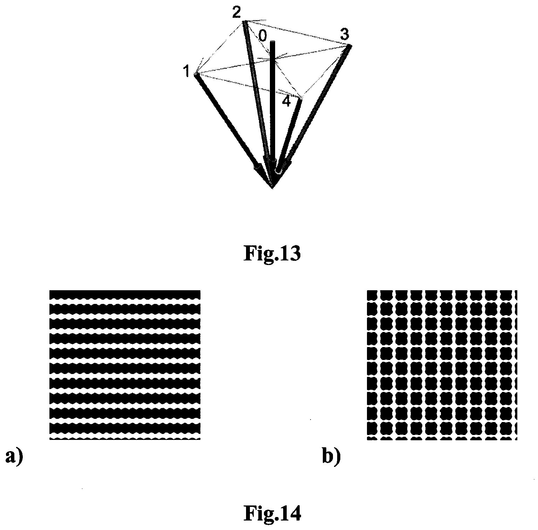

Fig. 13- The scheme of the layout of the four symmetrically arranged beams and the central beam.

Fig. 14 - Images of the periodic structures obtained by forming with the symmetrically arranged four interfering laser beams and the central beam according to Fig. 13, when $\Delta\varphi = \pi/2$, $I_{th} = I_0 \times 40\%$, $\Delta z = 0$ (a) and $\Delta z = 0.2$ period in the z direction (b).

The proposed method for formation of periodical structures comprises the following sequence of operations. The pulse laser beam is split into a chosen number of beams from 3 to 6, i.e. three, four or six, and they are directed into a thin film deposited on the substrate material, symmetrically in respect to the normal to the surface of the film, in such a way that, they interfere there by forming a periodic intensity distribution of laser radiation. The total intensity of the interfering laser beams is chosen so that it is higher than the ablation threshold of the said film $I_{th}$, while the ablation threshold of the film would be between about 50% to about 1.5% of the intensity $I_0$ formed at the maxima of the interference distribution. Changes of the said total intensity within the specified limits to the extent that are required for the formation of the selected periodic structure images. The said interference image can be additionally changed by choosing the phase difference $\Delta\varphi$ between the interfering laser beams. Besides, the said image can be changed by directing the central laser beam along the direction of the symmetry axis of the interfering beams, and/or by choosing the distance between the said film and the intersection point of the beams along the propagation direction of the central beam.

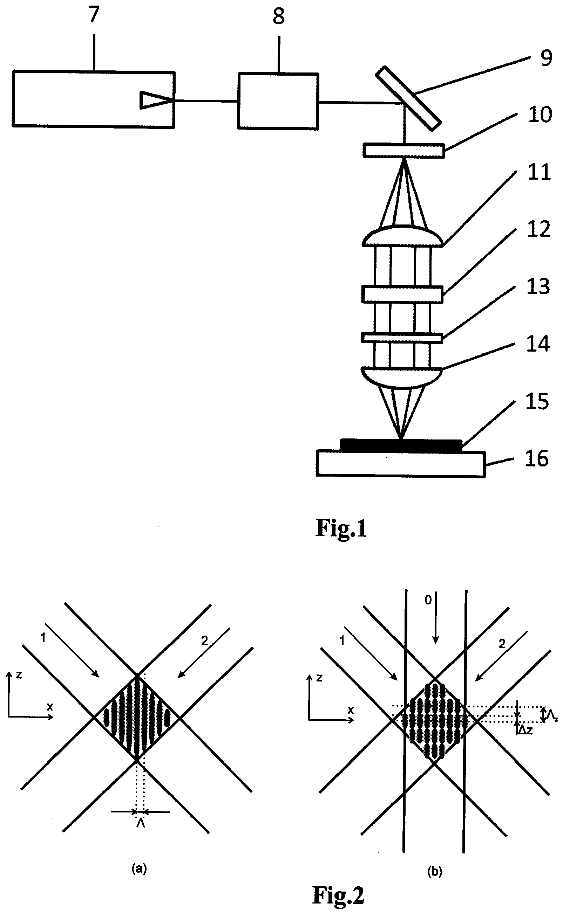

The proposed method for formation of periodical structures in thin material films by interfering laser beams 1-6 can be realized with the device, the optical scheme of which is shown in Fig. 1. The device has a pulsed laser 7, on the beam propagation path of which there are sequentially placed: a laser pulse energy control unit 8, (e.g. attenuator, consisting of Pockels cell and a thin-film polarizer), a high reflecting mirror 9, a diffractive optical element 10 for splitting the beam into 3, 4 or 6 beams (with additionally, including or excluding the central beam), a collimating lens 11, a unit for controlling the phase difference 12 (e.g. a parallel glass plate, which can be rotated), a diaphragm 13 for beam selection, a focal lens 14, a sample 15 (thin film on the substrate), a positioning device for the sample 16 (e.g. a piezo-electric XYZ 3-axis nanopositioning system).

The scheme of interference pattern formation without the central beam is shown in Fig. 2a, and with the central beam present is shown in Fig. 2b. When the central beam is absent, the interference image does not change in the direction perpendicular to the surface of the sample z throughout the entire beam overlap zone. The central beam generates additional modulation of the intensity distribution in the z direction. $\Lambda$ is the period of the interference image on the XY plane, (on the surface of the sample, the Y is perpendicular to the plane of the picture); $\Lambda_z$ is the period of the interference image in the z direction, which is perpendicular to the surface of the sample; $\Delta z$ is the shift along z axis (the shift of the sample with respect to the position of the focal point of the focusing lens).

Below we provide specific embodiment examples of the method, which do not limit the breadth of this patent.

In the case of the four laser beams 1-4, symmetrically arranged according to Fig. 3, the intensity distribution at the interference zone can be expressed by the formula:

$$I_4(\mathbf{r}) \propto \left\langle \left[ E_1(\mathbf{r},t) + E_2(\mathbf{r},t) + E_3(\mathbf{r},t) + E_4(\mathbf{r},t) \right]^2 \right\rangle \propto 4E_0^2 \left\{ \begin{array}{l} 1 + \dfrac{1}{2}\cos\left[ (\mathbf{k}_1 - \mathbf{k}_2)\cdot\mathbf{r} + \varphi_1 - \varphi_2 \right] + \\[6pt] \dfrac{1}{2}\cos\left[ (\mathbf{k}_1 - \mathbf{k}_3)\cdot\mathbf{r} + \varphi_1 - \varphi_3 \right] + \\[6pt] \dfrac{1}{2}\cos\left[ (\mathbf{k}_1 - \mathbf{k}_4)\cdot\mathbf{r} + \varphi_1 - \varphi_4 \right] + \\[6pt] \dfrac{1}{2}\cos\left[ (\mathbf{k}_2 - \mathbf{k}_3)\cdot\mathbf{r} + \varphi_2 - \varphi_3 \right] + \\[6pt] \dfrac{1}{2}\cos\left[ (\mathbf{k}_2 - \mathbf{k}_4)\cdot\mathbf{r} + \varphi_2 - \varphi_4 \right] + \\[6pt] \dfrac{1}{2}\cos\left[ (\mathbf{k}_3 - \mathbf{k}_4)\cdot\mathbf{r} + \varphi_3 - \varphi_4 \right] \end{array} \right\} \quad (1)$$

where $\mathbf{E_i}$ the electric field, $\mathbf{k_i}$ wave vector and $\varphi_i$ phase for each out of 4 laser beams; $r$ *is* a coordinate vector. The indices indicate the laser beams: 1, 2, 3 and 4.

The intensity distribution of the interference field of the symmetrically arranged beams 1-4 (Fig.3) shown in Fig. 4a is a regular square matrix of interference maxima, i.e. the standard periodic structure made of circular holes.

The two-dimensional lattice period $\varLambda$ depends on the angle between the opposite beams:

$$\Lambda_4 = \left(\sqrt{2}/2\right)\left(\lambda/\sin\Theta\right),$$

where $\theta = \dfrac{(k_1;k_2)}{2} = \dfrac{(k_3;k_4)}{2}$ is a half-angle between the opposite beams and $\lambda$ is the wavelength of the laser radiation.

The interference field distribution can be changed by modifying the phase difference (optical path difference) $\varDelta\varphi$ between the beams.

Since the optical system has a radial symmetry, therefore phases of all the interfering beams at the intersection point are the same, or the phase difference between each of the beams is equal to zero (since all the beams follow the same optical path). In order to introduce the phase difference between the beams it is necessary to create a difference in the optical path between the beams, for instance, in the path of the first beam a glass plate is placed with the thickness d and the refractive index $\mathbf{n}$, while the second beam travels the same distance through free space (air), in that case the path difference for the two beams is equal to $\mathbf{d(n\text{-}1)}$.

This results in a phase difference between the beams

$$\varphi_{12} = \frac{2\pi}{\lambda} d(n-1). \quad (2)$$

When the phase difference between the even (2, 4) and the odd (1, 3) beams is equal to $\pi/2$, the old maxima disappears and the new ones appear in the gaps between the former ones.

The interference field can be altered not only by changing the phase differences between the beams. The threshold nature of film ablation creates the conditions for additional control over shape of the periodic structures formed on the metal film, and that is the technical solution sought by this invention.

The structure, which is formed in the material film, depends not only on the arrangement of laser beams and the phase difference between the pairs of beams. The evaporation of material films is of a threshold nature: there is a minimum of laser intensity $\mathbf{I_{th}}$, which can ablate the film over its entire thickness. Therefore, the laser intensity, which is used for irradiation, by choosing it with respect to ablation threshold, is an additional tool for controlling the form of the periodic structures. This means that the material is ablated everywhere, where the local laser intensity exceeds the threshold value of intensity $\mathbf{I_{th}}$.

When the phase difference $\varDelta\varphi$ between the even (2, 4) and the odd (1, 3) beams is equal to $\pi/2$, and the threshold intensity for film ablation $\mathbf{I_{th}}$ is close to 50% level of laser intensity $\mathbf{I_0}$ at the interference maximum, the interference field distribution is of a "chess-board" type (Fig. 4b). As shown in Fig. 4c., such structure was fabricated appling a single laser pulse to a Cr film of 100 nm thickness, by precisely aligning the optical system and by choosing the laser intensity for the experiment, and by maintaining the phase difference between the even (2, 4) and the odd (1, 3) beams to be

equal to $\pi/2$, while the pulse energy was 0.14 mJ.

Several types of periodic structures were modeled with computer and fabricated using a single laser pulse ablation, when four laser beams interfere. When the phase difference $\Delta\varphi$ between the even (2, 4) and the odd (1, 3) beams is equal to $\pi/4$, and the threshold intensity for film ablation is at 14% level of laser intensity at the interference maximum, the structure produced using the interference method is made up of rectangular elements, arranged as a segmented net with small gaps between the segments (Fig. 4d).

The net-like structures were obtained by evaporating a Cr film of 100 nm thickness, with a single laser pulse with the 4-beam interference, as a monotonic phase shift change was used through the interference field. (Fig. 4e). The fabricated structures in the metallic films on the glass substrate show that it is possible to realize in practice the interference distribution cuts at the ablation threshold. The metal was ablated locally at the places, where the laser intensity exceeds the threshold value. The periodic "chess-board" and "net"- like structures were produced experimentally, by precisely adjustment of the phase difference and the laser intensity.

A net-like structure can be realized in a film on the substrate, when the phase difference between the even (2, 4) and the odd (1, 3) beams $\Delta\varphi$ is equal to $\pi/8$, and the film ablation threshold is at 4% level at the maximum of the laser intensity interference (Fig. 4f). Such structures can be applied for the manufacturing of frequency selective structures with the spectral filtering properties within the visible light range.

In the case of three laser beams, symmetrically arranged according to Fig. 5, at the film ablation threshold level of 11% at the maximum of the laser intensity interference, the produced image of the formed structure is shown in Fig. 6a. The periodic structure formed in this way consists of small size triangles, and it can be used as a surface plasmon antenna.

In the same case, having the film ablation threshold at 50% level, the shape of the formed structure, produced at the maximum of the laser intensity interference, is shown in Fig. 6b, which is standard.

In the case of six laser beams, symmetrically arranged according to Fig. 7, having the film ablation threshold at 4% level, the shape of the formed structure, produced at the maximum of the laser intensity interference, is shown in Fig. 8a. In the same case, having the film ablation threshold at 11% level, the shape of the formed structure, produced at the maximum of the laser intensity interference, is shown in Fig. 8b. Both structures can be used for manufacturing of metamaterials with the photonic crystal properties or frequency selective surfaces.

The whole class of periodic structures can be fabricated by using the interference of several symmetrically arranged beams and the central beam. In this case, the interference distribution in addition depends on the distance between the said film and the beams' intersection point within it, along the direction of the central beam.

In the case of three symmetrically arranged laser beams and one central beam, arranged according to Fig. 9, at the film ablation threshold level of 6% at the maximum of the laser intensity interference, the shape of the formed structure is shown in Fig. 10a, while at the film ablation threshold level of 11 % at the maximum of the laser intensity interference, the shape of the formed structure is shown in Fig. 10b.

In the case of six symmetrically arranged laser beams and one central beam, arranged according to Fig. 11, at the film ablation threshold level of 1.5% at the maximum of the laser intensity interference, the shape of the formed structure is shown in Fig. 12a, while at the film ablation threshold level of 11% at the maximum of the laser intensity interference, the produced image of the formed structure is shown in Fig. 12b.

In the case of four symmetrically arranged laser beams and one central beam, arranged according to Fig. 13, at the film ablation threshold level of 40% at the maximum of the laser intensity interference, and the phase difference between the even (2, 4) and the odd (1, 3) beams $\Delta\varphi$ is equal to $\pi/2$, the shape of the formed structure is shown in Fig. 14a, when the sample is in the plane of the focusing lens's focal point $(\Delta\varphi = 0)$. When the sample is moved away by $\Delta\boldsymbol{z} = \boldsymbol{0.2\Lambda_z}$ in the z direction, having the same conditions, the shape of the formed structure is shown in Fig. 14b.

All "non-standard" structures are created, when the threshold intensity of the film evaporation $I_{th}$ is less than 50% of intensity $I_0$ at the maximum of the of the interference distribution. By "standard" structures here we refer to the ones that can be found in patents or published papers, i.e. regularly arranged circular holes in a square (4 beams) or hexagonal (3 or 6 beams) matrix.

The stability of the formed structures over a large area requires high phase stability (alignment) and homogeneity of exposure across the entire area of interference. Shaped laser beams with flat-top can be applied in order to ensure better homogeneity of the structures. Using the short laser pulse duration of less than 100 ps, evaporation in the film takes faster than the heat transfer, therefore the structure of the interference image remains intact despite of the possible melting of the film material.

**Claims**

1. Method for the formation of periodic structures in a thin material film (15) by interfering pulsed laser beams, wherein the thin film (15) is laid on a substrate (16) having different optical properties than the thin film, the method comprising :

- directing a plurality of pulsed laser beams into the thin film (15), whereby the pulsed laser beams are picosecond laser beams which intersect in such a way that they produce through interference a periodic laser beam intensity distribution, which can be varied depending on a choice of appropriate control parameters including the number of interfering laser beams and/or a phase difference between interfering laser beams and/or the intensity of each interfering laser beam, according to the periodic structure to be formed,

- ablating the material of the thin film at the high-intensity zones of the laser beam intensity distribution, while the remaining material forms the periodic structure that corresponds to the layout of the low-intensity zones, **characterised in that** the choice of the appropriate control parameters is performed simultaneously with an adjustment of the overall intensity of the interfering laser beams in such a way that the threshold intensity $I_{th}$ for evaporation of the thin film over its entire thickness is from about 1.5 percents up to 50 percents of the intensity $I_0$ at the maximum of the high-intensity zone of the laser beam intensity distribution, ensuring evaporation of the thin film.

2. Method according to claim 1, wherein the picosecond laser beams have a pulse duration < 100 ps.

3. Method according to claim 1 or 2, wherein three, four, or six interfering laser beams (1-6), arranged symmetrically with respect to a central laser beam (0) normal to the thin film surface, are directed into the thin film and wherein the laser beam intensity distribution is additionally varied by choosing the distance $\Delta z$ between the thin film (15) and the beam interaction point within it along the propagation direction of the central beam (0).

4. Method according to any of claims 1 to 3, wherein the thin film material is a metal, preferably chromium, aluminium, silver, copper or gold, while the substrate material is a transparent material, preferably glass.

5. Method according to any of claims 1 to 3 wherein the thin film material is an electrically conductive material, preferably indium-tin oxide, while the substrate material is a dielectric material, preferably polymer or glass.


**Patentansprüche**

1. Verfahren zur Bildung von periodischen Strukturen in einem dünnen Materialfilm (15) durch störende gepulste Laserstrahlen, wobei der Dünnfilm (15) auf ein Substrat (16) mit unterschiedlichen optischen Eigenschaften als der Dünnfilm gelegt wird, wobei das Verfahren umfasst:

- Leiten mehrerer gepulster Laserstrahlen in den Dünnfilm (15), wobei die gepulsten Laserstrahlen Pikosekunden-Laserstrahlen sind, die sich so schneiden, dass sie durch Interferenz eine periodische Laserstrahlintensitätsverteilung erzeugen, die je nach Wahl geeigneter Steuerparameter, einschließlich variiert werden kann der Anzahl von interferierenden Laserstrahlen und/oder einer Phasendifferenz zwischen störenden Laserstrahlen und/oder der Intensität jedes störenden Laserstrahls gemäß der zu bildenden periodischen Struktur,

- Abtragen des Materials des Dünnfilms an den hochintensiven Zonen der Laserstrahlintensitätsverteilung, während das verbleibende Material die periodische Struktur bildet, die dem Layout der Zonen mit geringer Intensität entspricht,

**dadurch gekennzeichnet, daß** die Wahl der entsprechenden Steuerparameter gleichzeitig mit einer Einstellung der Gesamtintensität der störenden Laserstrahlen derart erfolgt, daß die Schwellenintensität $I_{th}$ zur Verdampfung des Dünnfilms über seine gesamte Dicke etwa 1,5 Prozent beträgt bis zu 50 Prozent der Intensität $I_0$ am Maximum der Hochintensitätszone der Laserstrahlintensitätsverteilung, wodurch eine Verdampfung des Dünnfilms gewährleistet ist.

2. Verfahren nach Anspruch 1, bei dem dass die Pikosekunden-Laserstrahlen eine Pulsdauer <100 ps aufweisen.

3. Verfahren nach Anspruch 1 oder 2, bei dem dass drei, vier oder sechs störende Laserstrahlen (1-6), die symmetrisch zu einem zentralen Laserstrahl (0) angeordnet sind, der senkrecht zur Dünnfilmoberfläche ist, in den Dünnfilm geführt werden und wobei die die Laserstrahlintensitätsverteilung zusätzlich durch Auswählen des Abstandes $\Delta z$ zwischen dem Dünnfilm (15) und dem Wechselwirkungspunkt in ihm geändert entlang der Ausbreitungsrichtung des zentralen Laserstrahls (0).

4. Verfahren nach einem der Ansprüche 1 bis 3, bei dem dass das Dünnfilmmaterial ein Metall, vorzugsweise Chrom, Aluminium, Silber, Kupfer oder Gold ist, während das Substratmaterial ein transparentes Material, vorzugsweise Glas ist.

**5.** Verfahren nach einem der Ansprüche 1 bis 3, bei dem dass das Dünnfilmmaterial ein elektrisch leitfähiges Material, vorzugsweise Indium-Zinn-Oxid ist, während das Substratmaterial ein dielektrisches Material ist, vorzugsweise Polymer oder Glas.

**Revendications**

**1.** Procédé pour la formation de structures périodiques dans un film de matériau mince (15) en interférant des faisceaux laser pulsés, dans lequel le film mince (15) est posé sur un substrat (16) ayant des propriétés optiques différentes de celles du film mince, le procédé comprenant :

- la direction d'une pluralité de faisceaux laser pulsés dans le film mince (15), les faisceaux laser pulsés étant des faisceaux laser picosecondes qui se croisent de telle sorte qu'ils produisent, par leur interférence, une distribution périodique d'intensité du faisceau laser, qui peut varier selon un choix de paramètres de contrôle appropriés y compris le nombre de faisceaux laser interférant et/ou une différence de phase entre faisceaux laser interférant et/ou l'intensité de chaque faisceau laser interférant, selon la structure périodique à former,
- l'ablation du matériau du film mince dans les zones de haute intensité de la distribution d'intensité du faisceau laser, tandis que le matériau restant forme la structure périodique qui correspond à la mise en page des zones de faible intensité,

**caractérisé en ce que** le choix des paramètres de commande appropriés est effectué simultanément avec un ajustement de l'intensité globale des faisceaux laser interférant de telle sorte que l'intensité de seuil $I_{th}$ pour l'évaporation du film mince sur toute son épaisseur est d'environ 1,5 pour cent jusqu'à 50 pour cent de l'intensité $I_0$ au maximum de la zone à haute intensité de la distribution d'intensité du faisceau laser, assurant l'évaporation du film mince.

**2.** Procédé selon la revendication 1, selon laquelle les faisceaux laser à picoseconde ont une durée d'impulsion <100 ps.

**3.** Procédé selon la revendication 1 ou 2, selon laquelle trois, quatre ou six faisceaux laser interférents (1-6), disposés symétriquement par rapport à un faisceau laser central (0), perpendiculaire à la surface du film mince, sont dirigés vers le film mince, et dans lequel la distribution d'intensité du faisceau laser est en outre variée en choisissant la distance $\Delta z$ entre le film mince (15) et le point d'interaction du faisceau en son sein le long de la direction de propagation de la faisceau laser central (0).

**4.** Procédé selon l'une quelconque des revendications 1 à 3, selon laquelle le matériau à film mince est un métal, de préférence du chrome, de l'aluminium, de l'argent, du cuivre ou de l'or, tandis que le matériau du substrat est un matériau transparent, de préférence du verre.

**5.** Procédé selon l'une quelconque des revendications 1 à 3, selon laquelle le matériau à film mince est un matériau électriquement conducteur, de préférence l'oxyde d'indium et d'étain, tandis que le matériau de substrat est un matériau diélectrique, de préférence du polymère ou du verre.

**Fig.1**

(a)                                    (b)

**Fig.2**

**Fig.3**

**Fig.4**

**Fig.5**

a)                                        b)

**Fig.6**

**Fig.7**

a)

b)

**Fig.8**

**Fig.9**

a)

b)

**Fig.10**

**Fig.11**

a)

b)

**Fig.12**

**Fig.13**

a)                                b)

**Fig.14**

## REFERENCES CITED IN THE DESCRIPTION

### Patent documents cited in the description

- JP 62114138 B
- JP 11026344 B
- CN 1603888

- JP 2003025085 B
- DE 102006023940

### Non-patent literature cited in the description

- Formation of arrayed holes on metal foil and metal film by multibeam interfering femtosecond laser beams. **ZHAO QUAN-ZHONG et al.** Chinese Physics. Institue of Phasics Publishing, June 2010, vol. 14, 1181-1184